# EUROPEAN PATENT SPECIFICATION

(11) **EP 2 802 802 B1**
(45) Date of publication and mention of the grant of the patent: **06.01.2016**
(21) Application number: 13704624.9
(22) Date of filing: 11.01.2013
(51) Int. Cl.: F16L 55/168

(54) **PIPE REPAIR MEANS**
ROHRREPARATURMITTEL
MOYEN DE RÉPARATION DE TUBE

(30) Priority: 13.01.2012 GB 201200516
(43) Date of publication of application: 19.11.2014
(73) Proprietor: Burkert Innovative Solutions Limited, Merseyside L32 8TT (GB)
(72) Inventor: BURKERT, Bradley, Liverpool Merseyside L32 8TT (GB)
(74) Representative: Walker, Ross Thomson
(86) International application number: PCT/GB2013/050041
(87) International publication number: WO 2013/104908

(56) References cited:
- GB-A- 2 286 442
- US-A- 1 704 760
- US-A- 4 890 373

## Description

### Field of the Invention

The present invention relates to device for repairing pipes and in particular a device securable over a breach in a pipe to patch a leak therein.

### Background of the Invention

Systems of pipe work are used to facilitate the transport of fluids of various types around domestic and commercial properties. The most common forms of fluid transported by piping are water and gas.

Over time, or as a result of mechanical stresses, pipe work can become damaged leading to the formation of leaks. Various approaches to repairing such leaks are known, with the approach used being determined by factors such as the size of the hole and its location.

In situations where the damaged pipe work can be accessed without causing too much disruption a plumber can simply replace all or a large portion of the damaged pipe. Depending on the nature of the repair this may or may not require soldering to seal the joint between the replacement pipe and the rest of the system.

However in circumstances where the damaged pipe work cannot easily be accessed, or to do so would cause a large amount of disruption which would require subsequent repairs to make the area good again (e.g. plastering, decorating, etc..), there is a need for a more localised repair of the leak.

One example of a more localised approach to repairing a leak in a pipe without replacing the damaged area of pipe work is described in US Patent 4890373. The localised approach makes use of a patch or clip that is fixed, usually by a bonding agent or adhesive, over the damaged area of pipe.

The use of solder to seal the patch over the damaged area is also described in the US patent.

### Summary of the Invention

The present application seeks to provide an improved pipe repairing means for use in the localised repair of damaged pipe work using solder rather than a bonding agent to secure the repair in place.

The present invention provides a method of manufacturing a pipe repair device comprising: a) providing a sheet of malleable metal; b) forming a continuous recess or channel in one side of the sheet so as to define a distinct inner central region and outer perimeter region on the sheet; c) providing a solder material in the recess; and d) forming the sheet into an incomplete cylinder shape.

It will be appreciated that the term incomplete cylinder shape refers to a cylinder with a gap running along it length.

The sheet material used to manufacture the repair device of the present invention must be malleable so that the recessed portion can easily be formed therein and also so that sheet can be formed into the required shape. Preferably the material used is copper as this is the most common material used in the repair of pipes. Preferably the sheet is rectangular in shape.

In order to get the solder into the recess preferably the solder may be heated, so that it flows in to the recess, and then allowed to cool so that it solidifies in the recess.

Preferably the sheet may be formed into the incomplete cylinder shape before the solder is provided. Alternatively the sheet may be formed into the incomplete cylinder shape after the solder is provided.

Preferably the sheet may be formed in to an incomplete cylinder shape having a gap between the two edges of the sheet that is between 25 to 40%, and further preferably 30% of the entire circumference of the notional complete cylinder. This ensures that the device can be clipped onto the pipe that is being repaired.

It is appreciated that alternative means of enabling the device to be clipped onto the pipe could be employed without departing from the general concept of the present invention.

The present invention also provides a pipe repair device for repairing damaged sections of piping, said device being shaped so as to snugly clip around a major part of the circumference of a damaged pipe so as to cover the damaged area of the pipe, and wherein the device is characterised in that an inner surface on the device has a recessed portion within which a reservoir of solder is retained.

Preferably the recessed portion may be located in from the sides of the device. In this way the outer region of the inner surface can be bonded to the pipe by the solder. It is noted that as soon as the solder begins to seep out from behind the device the plumber can stop heating the device.

Preferably the recessed portion may comprise a continuous channel that provides a perimeter around a central region of the inner surface of device. In this way the damaged region of the pipe can be completely surrounded by solder when it is aligned with the central region.

Preferably the recessed portion may also protrude from an outer surface of the device located on the reverse of the inner surface. In this way the protruding portion can be used to guide the plumber when locating the device over the damaged region of the pipe.

The present invention also provides a method of repairing a damaged pipe comprising the steps of: a) locating the device of the present invention over the damaged section of pipe; and b) heating the outer surface of the device on the opposite side of the device to the solder containing recess.

Preferably the method may further comprise the step of aligning the damaged section of pipe with the central region of the inner surface of the device.

### Brief Description of the Drawings

The present invention will now be described with reference to the preferred embodiment shown in the drawings, wherein:
Figure 1 shows a preferred embodiment of the pipe repair device of the present invention;
Figure 2 shows the device of figure 1 in a flattened form; and
Figure 3 shows a damaged pipe before and after a repair using the device of figure 1.

### Detailed Description of the Preferred Embodiment

The pipe repair device of the present invention will be appreciated from consideration of the figures, in which in can be seen that the device 1 takes the form of a patch or clip which has an incomplete cylinder shaped formed from a suitable material such as copper.

It will be appreciated that pipes, such as gas and water pipes, come in a ranged of different standard sizes. In view of this fact it is envisaged that the actual dimensions (e.g. internal and external diameter) of the device of the present invention used to affect a repair will vary accordingly without departing from the scope of the present invention.

However it is considered important that the device must be shaped so as to ensure it can be 'clipped' around the pipe that is to be repaired. In order to achieve this it is envisaged that gap between the two edges of the incomplete cylinder shaped body 2 of the device 1 must extend around less that half of the circumference. It is envisaged that the gap would extend around 25-40% of the cylinder's circumference and more preferably about 30%.

Also, in order that the device might be 'clipped' on to the pipe, the gap between the two edges of the incomplete cylinder shaped body 2 of the device 1 must not be too small to enable the device to be forced on to a section of pipe without causing damage.

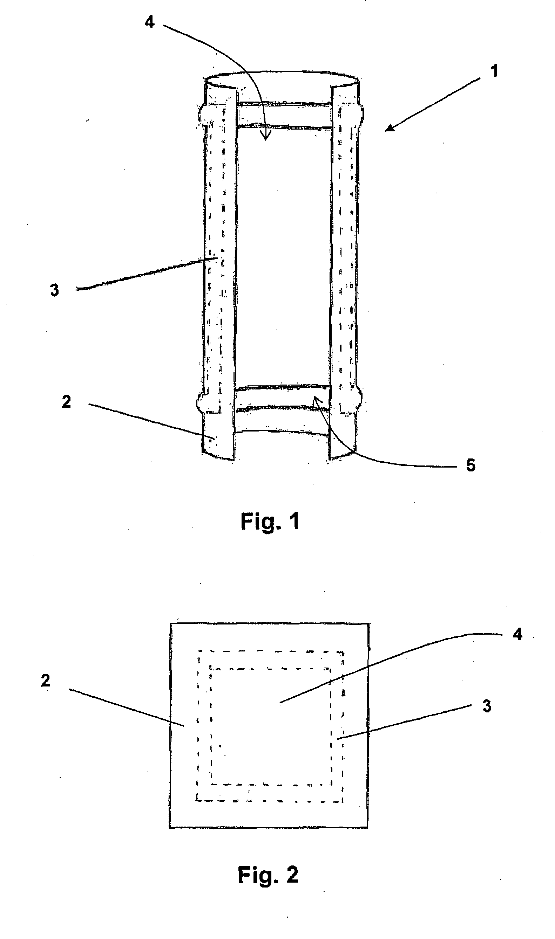

On the inner surface of the body 2 is provided a recessed region or recess 3. The recess 3, which preferably projects outwards from the outer surface of the body 2, defines a continuous perimeter around a central region 4 of the inner surface. This can be better appreciated from Figure 2, which shows the device of Figure 1 in its flattened form prior to being shaped into the above described incomplete cylinder shape.

Within the recess.3 is a reservoir of solder material 5. Preferably the recess 3 is located in from the edges of the device 1 so as to provide a surface which the solder can seal to the surface of the pipe being repaired.

A method of manufacturing the device of the present invention will now be described. The process starts by selecting a rectangular sheet of suitable material, such as copper, having suitable dimensions to form an incomplete cylinder body 2 in accordance with the physical characteristics described above.

The sheet is then pressed using a suitable machine to form the recess 3 in a generally central location on the sheet. Once the recess is formed solder 5 can be introduced into the recess 3. This can be done by heating the solder until it is fluid enough to flow into the recess.

Once the recess has been filed by the solder the sheet can be allowed to cool, thus allowing the solder to solidify in the recess. Any excess solder can be removed at this time

Once the solder has cooled the sheet can be bent into the required incomplete cylinder shape, possibly using a standard length of pipe (or a mould with identical dimensions). Once formed the device 1 can be slid off the end of the pipe/mould to ensure the device retains its shape.

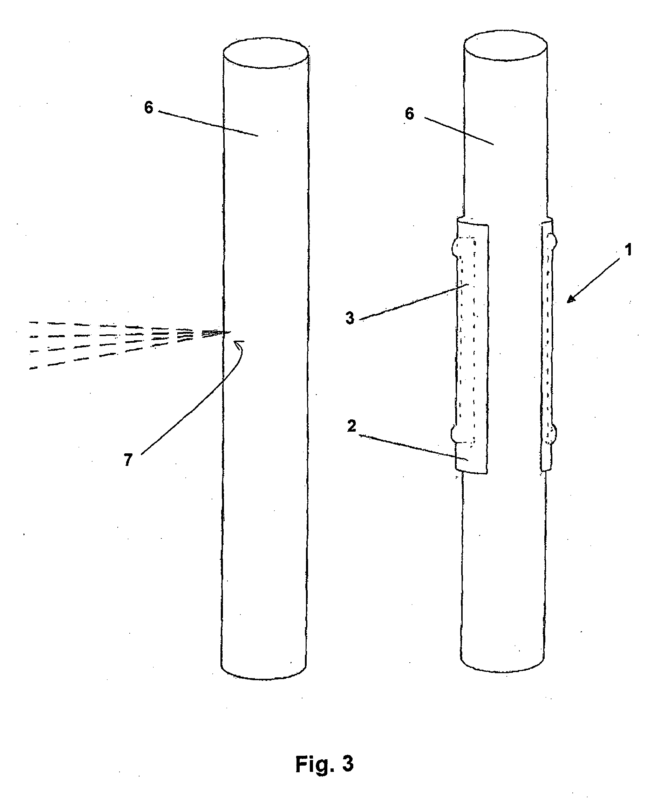

Referring now to Figure 3 the actual repair of a damaged pipe using the device of the present invention will now be described. A pipe 6 has been damaged and as a result is suffering from a leak 7.

The repair of this damaged pipe would normally be a time consuming job, which would typically require a plumber to cut out the damaged pipe and replace it with a new piece.

The device 1 of the present invention enables a much quicker and easier repair to be carried out by the plumber. To repair the damaged pipe 6 a plumber first selects the appropriate size of repair device 1 and then clips it on to the damaged pipe 6.

The plumber then slides or rotates the device until it is located over the leak. In order for the device to effectively seal the leak the device must be positioned so that the recess 3 completely surrounds the hole in the pipe. This alignment process is assisted by opposing side of the recess which extend from the outer surface of the device 1.

Once the device 1 is in position the plumber can apply heat to the outer surface of the device around the area of the recess. In this way the solder 5 is caused to melt and form a bond between the pipe and the device, thereby affecting a repair of the pipe once the solder cools again.

The device of the present invention is considered particularly useful when repairing hard to reach pipe work or damaged areas of pipes that face towards walls for example.

## Claims

1. A method of manufacturing a pipe repair (1) device comprising:
a) providing a sheet of malleable metal;
b) forming a continuous recess (3) or channel in one side of the sheet so as to define a distinct inner central region (4) and outer perimeter region on the sheet;
c) providing a solder material (5) in the recess; and
d) forming the sheet into an incomplete cylinder shape (2).

2. The method of claim 1, wherein the sheet is made from copper.

3. The method of claim 1 or 2, wherein the sheet is rectangular in shape.

4. The method of claim 1, 2 or 3, wherein the solder (5) is heated, so that it flows in to the recess (3), and then allowed to cool, so that it solidifies in the recess (3).

5. The method of any of claims 1 to 4, wherein the sheet is formed into the incomplete cylinder shape (2) before the solder (5) is provided.

6. The method of any of claims 1 to 4, wherein the sheet is formed into the incomplete cylinder shape (2) after the solder (5) is provided.

7. The method of any of claims 1 to 6, wherein the sheet is formed in to an incomplete cylinder shape (2) having a gap between the two edges of the sheet that is between 25 to 40% of the entire circumference of the cylinder.

8. A pipe repair device (1) for repairing damaged sections of piping (6), said device being shaped so as to snugly clip around a major part of the circumference of a damaged pipe (6) so as to cover the damaged area of the pipe, and wherein the device is **characterised in that** an inner surface on the device has a recessed portion (3) within which a reservoir of solder (5) is retained.

9. The device of claim 8, wherein the recessed portion (3) is located in from the sides of the device (1).

10. The device (1) of claim 8 or 9, wherein the recessed portion (3) comprises a continuous channel that provides a perimeter around a central region (4) of the inner surface of device.

11. The device (1) of claim 8, 9 or 10, wherein the recessed portion (3) also protrudes from an outer surface of the device located on the reverse of the inner surface.

12. The device (1) of any of claims 8, 9, 10 or 11 as manufactured by the method according to any of claims 1 to 7.

13. A method of repairing a damaged pipe (6) comprising the steps of:
a) locating the device (1) of any of claims 8 to 12 over the damaged section of pipe (6); and
b) heating the outer surface of the device (1) on the opposite side of the device (1) to the solder (5) containing recess (3).

14. The method of claim 13 when using the device (1) of claim 10, further comprising the step of aligning the damaged section of pipe (6) with the central region (4) of the inner surface of the device.

## Patentansprüche

1. Verfahren zum Herstellen eines Rohrreparaturmittels (1), umfassend:
a) Bereitstellen eines Bleches aus verformbarem Metall;
b) Formen einer durchgehenden Aussparung (3) oder Rinne in einer Seite des Blechs, um eine eigenständige innere zentrale Region (4) und äußere Perimeterregion auf dem Blech zu definieren;
c) Bereitstellen eines Lötmaterials (5) in der Aussparung; und
d) Formen des Blechs in eine unvollständige Zylinderform (2).

2. Verfahren nach Anspruch 1, worin das Blech aus Kupfer hergestellt ist.

3. Verfahren nach Anspruch 1 oder 2, worin das Blech eine rechteckige Form aufweist.

4. Verfahren nach Anspruch 1, 2 oder 3, worin das Lot (5) erhitzt wird, sodass es in die Aussparung (3) fließt, und dann abkühlen kann, sodass es in der Aussparung (3) erstarrt.

5. Verfahren nach irgendeinem Anspruch 1 bis 4, worin das Blech in die unvollständige Zylinderform (2) geformt wird, bevor das Lot (5) bereitgestellt wird.

6. Verfahren nach irgendeinem Anspruch 1 bis 4, worin das Blech in die unvollständige Zylinderform (2) geformt wird, nachdem das Lot (5) bereitgestellt wird.

7. Verfahren nach irgendeinem Anspruch 1 bis 6, worin das Blech in eine unvollständige Zylinderform (2) aufweisend eine Lücke zwischen den beiden Kanten des Bleches, die 25 bis 40 % des Gesamtumfangs des Zylinders beträgt, geformt wird.

8. Rohrreparaturmittel (1) zum Reparieren beschädigter Rohrabschnitte (6), wobei besagtes Mittel so geformt ist, dass es passgenau um einen Großteil des Umfangs eines beschädigten Rohres (6) herum geklemmt wird, um den beschädigten Bereich des Rohres abzudecken, und worin das Mittel **dadurch gekennzeichnet ist, dass** eine Innenfläche an dem Mittel einen ausgesparten Abschnitt (3) aufweist, innerhalb dessen ein Behälter mit Lot (5) aufbewahrt wird.

9. Mittel nach Anspruch 8, worin der ausgesparte Abschnitt (3) von den Seiten des Mittels (1) einwärts positioniert ist.

10. Mittel (1) nach Anspruch 8 oder 9, worin der ausgesparte Abschnitt (3) eine durchgehende Rinne umfasst, die einen Perimeter um eine zentrale Region (4) der Innenfläche des Mittels herum bereitstellt.

11. Mittel (1) nach Anspruch 8, 9 oder 10, worin der ausgesparte Abschnitt (3) auch aus einer Außenfläche des Mittels, befindlich auf der Rückseite der Innenfläche, hervorsteht.

12. Mittel (1) nach irgendeinem Anspruch 8, 9, 10 oder 11, wie durch das Verfahren nach irgendeinem Anspruch 1 bis 7 hergestellt.

13. Verfahren zum Reparieren eines beschädigten Rohres (6) umfassend die folgenden Schritte:
a) Positionieren des Mittels (1) nach irgendeinem Anspruch 8 bis 12 über dem beschädigten Rohrabschnitt (6); und
b) Erhitzen der Außenfläche des Mittels (1) auf der Seite, die gegenüber der Lot (5) enthaltenden Aussparung (3) ist, des Mittels (1).

14. Verfahren nach Anspruch 13 bei Verwendung des Mittels (1) nach Anspruch 10, ferner umfassend den Schritt des Ausrichtens des beschädigten Rohrabschnittes (6) mit der zentralen Region (4) der Innenfläche des Mittels.

## Revendications

1. Procédé de fabrication d'un dispositif de réparation de tuyau (1) comprenant :
a) fournir une feuille de métal malléable ;
b) former un évidement continu (3) ou un canal d'un côté de la feuille afin de définir une région centrale intérieure (4) distincte et une région périmétrique extérieure sur la feuille ;
c) apporter un matériau de soudure (5) dans l'évidement ; et
d) façonner la feuille en forme de cylindre incomplet (2).

2. Procédé selon la revendication 1, dans lequel la feuille est en cuivre.

3. Procédé selon la revendication 1 ou 2, dans lequel la feuille est de forme rectangulaire.

4. Procédé selon la revendication 1, 2 ou 3, dans lequel le matériau de soudure (5) est chauffé de sorte qu'il s'écoule dans l'évidement (3), puis laissé refroidir de sorte qu'il se solidifie dans l'évidement (3).

5. Procédé selon l'une quelconque des revendications 1 à 4, dans lequel la feuille est façonnée en forme de cylindre incomplet (2) avant l'apport du matériau de soudure (5).

6. Procédé selon l'une quelconque des revendications 1 à 4, dans lequel la feuille est façonnée en forme de cylindre incomplet (2) après l'apport du matériau de soudure (5).

7. Procédé selon l'une quelconque des revendications 1 à 6, dans lequel la feuille est façonnée en forme de cylindre incomplet (2) comprenant un espace entre les deux bords de la feuille qui est compris entre 25 et 40 % de la circonférence totale du cylindre.

8. Dispositif de réparation de tuyau (1) pour la réparation de sections endommagées d'une tuyauterie (6), ledit dispositif ayant une forme lui permettant de s'attacher sûrement autour d'une partie principale de la circonférence d'un tuyau endommagé (6) de manière à couvrir la zone endommagée du tuyau, et ledit dispositif étant **caractérisé en ce qu'**une surface intérieure du dispositif a une partie évidée (3) dans laquelle un réservoir de matériau de soudure (5) est retenu.

9. Dispositif selon la revendication 8, dans lequel la partie évidée (3) est située par rapport aux côtés du dispositif (1).

10. Dispositif (1) selon la revendication 8 ou 9, dans lequel la partie évidée (3) comprend un canal continu qui constitue un périmètre autour d'une région centrale (4) de la surface intérieure du dispositif.

11. Dispositif (1) selon la revendication 8, 9 ou 10, dans lequel la partie évidée (3) fait également saillie par rapport à une surface extérieure du dispositif situé sur l'envers de la surface intérieure.

12. Dispositif (1) selon l'une quelconque des revendications 8, 9, 10 et 11, fabriqué selon le procédé selon l'une quelconque des revendications 1 à 7.

13. Procédé de réparation d'un tuyau endommagé (6), comprenant les étapes consistant à :
a) situer le dispositif (1) selon l'une quelconque des revendications 8 à 12 sur la section de tuyau endommagée (6) ; et
b) chauffer la surface extérieure du dispositif (1) sur le côté du dispositif (1) opposé à l'évidement (3) contenant le matériau de soudure (5).

14. Procédé selon la revendication 13 lors de l'utilisation du dispositif (1) selon la revendication 10, comprenant en outre l'étape consistant à aligner la section de tuyau endommagée (6) avec la région centrale (4) de la surface intérieure du dispositif.
